(19) 

Europäisches Patentamt
European Patent Office
Office européen des brevets

(11) **EP 4 614 209 A1**

(12) **EUROPEAN PATENT APPLICATION**
published in accordance with Art. 153(4) EPC

(43) Date of publication:
**10.09.2025  Bulletin 2025/37**

(21) Application number: **23884211.6**

(22) Date of filing: **26.06.2023**

(51) International Patent Classification (IPC):
**G02B 27/00** (2006.01)    **G02B 27/01** (2006.01)

(52) Cooperative Patent Classification (CPC):
**G02B 5/00; G02B 27/00; G02B 27/01**

(86) International application number:
**PCT/CN2023/102365**

(87) International publication number:
**WO 2024/093272 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **31.10.2022  CN 202211349472**

(71) Applicant: **Shenzhen Yinwang Intelligent
Technologies Co., Ltd.
Shenzhen, Guangdong 518129 (CN)**

(72) Inventors:
• **CHEN, Xia
 Shenzhen, Guangdong 518129 (CN)**
• **CHEN, Chen
 Shenzhen, Guangdong 518129 (CN)**
• **XU, Zhigao
 Shenzhen, Guangdong 518129 (CN)**

(74) Representative: **Gill Jennings & Every LLP
The Broadgate Tower
20 Primrose Street
London EC2A 2ES (GB)**

(54) **VIRTUAL IMAGE DISPLAY DEVICE AND VEHICLE**

(57)    A virtual image display apparatus and a transportation means are disclosed, and pertain to the field of display technologies. The virtual image display apparatus includes an image generation unit (110), a shielding unit (120), an optical path folding unit (130), and an imaging unit (140). The image generation unit (110) is configured to emit image light. The shielding unit (120) is located on an optical path between the image generation unit (110) and the optical path folding unit (130), and the shielding unit (120) is configured to: transmit at least a part of the image light from the image generation unit (110) to the optical path folding unit (130), and prevent at least a part of stray light from the optical path folding unit (130) from being emitted to the optical path folding unit (130). The optical path folding unit (130) is configured to direct the image light from the shielding unit (120) to the imaging unit (140). The imaging unit (140) is configured to form a virtual image based on the image light from the optical path folding unit (130). The virtual image display apparatus is conducive to eliminating a ghost image.

FIG. 4

## Description

This application claims priority to Chinese Patent Application No. 202211349472.9, filed with the China National Intellectual Property Administration on October 31, 2022 and entitled "VIRTUAL IMAGE DISPLAY APPARATUS AND TRANSPORTATION MEANS", which is incorporated herein by reference in its entirety.

## TECHNICAL FIELD

This application relates to the field of display technologies, and in particular, to a virtual image display apparatus and a transportation means.

## BACKGROUND

In people's daily life, virtual image display apparatuses are increasingly used.

In the related technology, the virtual image display apparatus includes an image generation unit, an optical path folding unit, and an imaging unit. The image generation unit provides image light carrying image information, the optical path folding unit is configured to direct the image light to the imaging unit, and the imaging unit forms a virtual image based on the image light. A user can view the virtual image at an appropriate position.

When the virtual image display apparatus displays the virtual image, stray light emitted by the image generation unit is directly incident to human eyes after being reflected between the foregoing units a plurality of times, and therefore, a ghost image is formed. When viewing the virtual image, the user may also view the ghost image, affecting a viewing effect of the user.

## SUMMARY

This application provides a virtual image display apparatus and a transportation means, to eliminate or weaken a ghost image in the virtual image display apparatus, and improve a display effect.

According to a first aspect, this application provides a virtual image display apparatus. The virtual image display apparatus includes an image generation unit, a shielding unit, an optical path folding unit, and an imaging unit. The image generation unit is configured to emit image light. The shielding unit is located on an optical path between the image generation unit and the optical path folding unit, and the shielding unit is configured to: transmit at least a part of the image light from the image generation unit to the optical path folding unit, and prevent at least a part of stray light from the optical path folding unit from being emitted to the optical path folding unit. The optical path folding unit is configured to direct the image light from the shielding unit to the imaging unit. The imaging unit is configured to form a virtual image based on the image light from the optical path folding unit.

When the virtual image display apparatus performs imaging, in addition to light that is normally imaged, a small amount of light that does not participate in normal imaging also appears on an image surface. This phenomenon is referred to as a stray light phenomenon. Harmful light that is superimposed on the image surface and does not participate in direct imaging may be referred to as stray light. In other words, in this application, light that is emitted by the image generation unit and that does not participate in normal imaging is referred to as stray light. When the virtual image display apparatus does not include the shielding unit, stray light from the image generation unit is directed (reflected) by the optical path folding unit to the imaging unit, and the stray light reflected by the imaging unit is directed by the optical path folding unit to an imaging surface of the image generation unit. Then, the imaging surface of the image generation unit reflects the stray light to the optical path folding unit, and the stray light is reflected to human eyes sequentially through the optical path folding unit and the imaging unit. If intensity of the stray light incident to human eyes is high, a user may view an obvious ghost image.

In this application, the stray light from the image generation unit passes through the shielding unit and arrives at the optical path folding unit, and the optical path folding unit directs (reflects) the received stray light to the imaging unit. The imaging unit then reflects the stray light to the optical path folding unit, and the stray light is directed to the shielding unit again through the optical path folding unit. A part of the stray light passes through the shielding unit and arrives at the image generation unit. Further, the image generation unit reflects the received stray light. The stray light passes through the shielding unit and arrives at the optical path folding unit, is directed by the optical path folding unit to the imaging unit, and finally is reflected to the human eyes by the imaging unit again.

Compared with a case in which the virtual image display apparatus does not include the shielding unit, in this case, because the shielding unit can prevent at least a part of the stray light from the optical path folding unit from being emitted to the optical path folding unit, in this embodiment of this application, intensity of the stray light reflected by the shielding unit to the optical path folding unit is low, so that intensity of the stray light incident to the human eyes is definitely reduced, and the user does not view an obvious ghost image or even views no ghost image. In this way, a display effect of the virtual image display apparatus is improved.

In this application, that the shielding unit prevents at least a part of stray light from the optical path folding unit from being emitted to the optical path folding unit includes: The shielding unit absorbs and/or changes a propagation direction of a part of the stray light from the optical path folding unit, so that the part of the stray light cannot arrive at the image generation unit, and/or the shielding unit absorbs and/or changes a propagation direction of a part of the stray light reflected by the image generation unit to the optical path folding unit, so that the part of the stray light cannot arrive at the optical path folding unit.

In this application, a reflection capability of a surface that is of the shielding unit and that is close to the optical path folding unit is lower than a reflection capability of the imaging surface of the image generation unit. For example, the reflection capability of the surface that is of the shielding unit and that is close to the optical path folding unit and the reflection capability of the imaging surface each are represented by a specular component include (specular component include, SCI) reflectivity. An SCI reflectivity of the surface that is of the shielding unit and that is close to the optical path folding unit is measured in a case in which the shielding unit is combined with the image generation unit.

For example, the SCI reflectivity of the surface that is of the shielding unit and that is close to the optical path folding unit is not greater than 2%. In this way, the ghost image can be basically eliminated.

Optionally, the shielding unit includes any one of the following film layers: an anti-reflection layer, an anti-glare layer, and an anti-reflection layer and an anti-glare layer that are stacked. The reflection capability of the imaging surface of the image shielding unit is reduced by using the three types of film layers. This is easy to implement and has low costs.

In some examples, when the shielding unit includes the anti-glare layer, internal haze of the anti-glare layer is greater than external haze of the anti-glare layer. In this way, display definition of the virtual image is improved. In some examples, the anti-glare layer has an anti-sparkling function. In this way, no obvious bright spot appears on the virtual image display apparatus. This helps improve viewing experience of the user.

In some examples, the image generation unit includes a direct imaging image source or a projection imaging image source. For example, the direct imaging image source includes a liquid crystal display (liquid crystal display, LCD), an organic light-emitting diode (organic light-emitting diode, OLED) display, or a light-emitting diode (light-emitting diode, LED) display. The projection imaging image source includes a light source and a reflective spatial light modulator, where the light source is configured to generate a light beam, and the reflective spatial light modulator is configured to: modulate and reflect the light beam generated by the light source, to obtain the image light. When the image generation unit includes the projection imaging image source, the image generation unit further includes a diffuser screen configured to: transmit the image light and form a real image. For example, the reflective spatial light modulator includes a liquid crystal on silicon (liquid crystal on silicon, LCoS) modulator or a micro-electro-mechanical system (micro-electro-mechanical system, MEMS) modulator.

Optionally, the image generation unit may further include a polarization state conversion element, and the polarization state conversion element is configured to convert the image light generated by the image source into a target polarization state. In this way, an image source type may be randomly selected based on a requirement, and implementation is more convenient.

In some examples, the shielding unit is attached to the imaging surface of the image generation unit. In this way, space occupied by the shielding unit is small, so that the virtual image display apparatus can be lighter and thinner. For the direct imaging image source, the imaging surface is a surface that is of the direct imaging image source and that faces the optical path folding unit. For the projection imaging image source, the imaging surface is a surface that is of the diffuser screen and that faces the optical path folding unit.

In some other examples, the shielding unit is disposed at an interval relative to the imaging surface of the image generation unit, so that a reflectivity for the stray light can also be reduced.

Optionally, the image light emitted by the image generation unit is linearly polarized light, circularly polarized light, or elliptically polarized light.

Optionally, the optical path folding unit may be of any one of the following structures.

In a first structure, a semi-transmission semi-reflection film is included. The semi-transmission semi-reflection film can transmit a part of received light, and reflect the other part of the light. In the first structure, there is no requirement on a polarization state of the image light emitted by the image generation unit, and the image light emitted by the image generation unit may be linearly polarized light, circularly polarized light, or elliptically polarized light.

In a second structure, a quarter-wave plate and a reflective polarizing film are included. The quarter-wave plate and the reflective polarizing film are sequentially located on an optical path of the image light emitted by the image generation unit, and are sequentially located on an optical path of the image light emitted by the imaging unit.

Circularly polarized light or elliptically polarized light emitted by the image generation unit is converted into linearly polarized light in a first polarization direction after passing through the quarter-wave plate, and the reflective polarizing film reflects the linearly polarized light in the first polarization direction from the quarter-wave plate to the quarter-wave plate again. The quarter-wave plate converts the linearly polarized light in the first polarization direction from the reflective polarizing film into circularly polarized light or elliptically polarized light again, and then emits the circularly polarized light or the elliptically polarized light to the imaging unit. The imaging unit reflects the received circularly polarized light or elliptically polarized light, the circularly polarized light or the elliptically polarized light is converted into linearly polarized light in a second polarization direction after passing through the quarter-wave plate, and then the linearly polarized light in the second polarization direction is emitted to human eyes through the reflective polarizing film, to form a virtual image.

In a third structure, a quarter-wave plate, a reflective polarizing film, and an absorptive polarizing film are included. The quarter-wave plate, the reflective polarizing film, and the absorptive polarizing film are sequentially located on an optical path of the image light emitted by the image generation unit, and are sequentially located on an optical path of the image light emitted by the imaging unit.

Circularly polarized light or elliptically polarized light emitted by the image generation unit is converted into linearly polarized light in a first polarization direction after passing through the quarter-wave plate, and the reflective polarizing film reflects most of the linearly polarized light in the first polarization direction from the quarter-wave plate to the quarter-wave plate again. The quarter-wave plate converts the linearly polarized light in the first polarization direction from the reflective polarizing film into circularly polarized light or elliptically polarized light again, and then emits the circularly polarized light or the elliptically polarized light to the imaging unit. The absorptive polarizing film is configured to absorb the linearly polarized light in the first polarization direction that passes through the reflective polarizing film. The imaging unit reflects the received circularly polarized light or elliptically polarized light, the circularly polarized light or the elliptically polarized light is converted into linearly polarized light in a second polarization direction after passing through the quarter-wave plate, and then the linearly polarized light in the second polarization direction is emitted to human eyes sequentially through the reflective polarizing film and the absorptive polarizing film, to form a virtual image.

The absorptive polarizing film is disposed, so that when the reflective polarizing film cannot completely reflect the linearly polarized light in the first polarization direction from the quarter-wave plate, the absorptive polarizing film may absorb the linearly polarized light that passes through the reflective polarizing film, to prevent the image light emitted by the image generation unit from being directly incident to the human eyes to form a real image, further avoid interference to the virtual image, and improve a viewing effect of the user.

In a fourth structure, an anti-reflection film, a quarter-wave plate, and a reflective polarizing film are included, where the anti-reflection film, the quarter-wave plate, and the reflective polarizing film are sequentially located on an optical path of the image light emitted by the image generation unit, and are sequentially located on an optical path of the image light emitted by the imaging unit. A propagation path of the image light in the fourth structure is basically the same as a propagation path of the image light in the second structure.

In a fifth structure, an anti-reflection film, a quarter-wave plate, a reflective polarizing film, and an absorptive polarizing film are included. The anti-reflection film, the quarter-wave plate, the reflective polarizing film, and the absorptive polarizing film are sequentially located on an optical path of the image light emitted by the image generation unit, and are sequentially located on an optical path of the image light emitted by the imaging unit. A propagation path of the image light in the fifth structure is basically the same as a propagation path of the image light in the third structure.

In some examples, the optical path folding unit has a reflective surface, the reflective surface is configured to reflect at least a part of the image light from the shielding unit to the imaging unit, and a value of an included angle between the reflective surface and an optical axis of the imaging unit ranges from 55 degrees to 75 degrees. A value of an included angle between an optical axis of the image generation unit and the optical axis of the imaging unit ranges from 55 degrees to 75 degrees.

When the reflective surface and the imaging surface of the image generation unit meet the foregoing angle relationship, display performance of the virtual image display apparatus is good. Herein, the display performance includes distortion, binocular parallax, a modulation transfer function (modulation transfer function, MTF), and the like.

In some examples, an included angle between the optical axis of the imaging unit and a horizontal plane ranges from 0 degrees to 5 degrees. Usually, a line of sight of the user is approximately parallel to the horizontal plane when the user views the virtual image. Therefore, the included angle between the optical axis of the imaging unit and the horizontal plane is set to 0 degrees to 5 degrees, which is convenient for the user to view.

Optionally, the imaging unit includes a curved-surface reflector or a lens.

Optionally, the virtual image display apparatus further includes a housing. The housing has an observation window. The image generation unit, the optical path folding unit, and the imaging unit are all located in the housing. The housing may protect the units, and the units are integrated together by using the housing, to facilitate overall movement of the virtual image display apparatus.

Optionally, the virtual image display apparatus further includes a main processor. The main processor is configured to send image data to the image generation unit, and the image generation unit is configured to provide the image light based on the received image data.

In some examples, the virtual image display apparatus further includes a power supply that supplies power to the main processor and the image generation unit.

In some examples, the virtual image display apparatus is a desktop display apparatus, for example, a display or a television.

According to another aspect, this application provides a transportation means, where the transportation means includes any one of the foregoing virtual image display apparatuses. The virtual image display apparatus is mounted on the transportation means. For example, the transportation means includes but is not limited to a vehicle, an airplane, a train, a ship, or the like.

**BRIEF DESCRIPTION OF DRAWINGS**

FIG. 1 is a diagram of a use status of a virtual image display apparatus according to an embodiment of this application;
FIG. 2 is a diagram of a use status of another virtual image display apparatus according to an embodiment of this application;
FIG. 3 is a diagram of a use status of still another virtual image display apparatus according to an embodiment of this application;
FIG. 4 is a diagram of a structure of a virtual image display apparatus according to an embodiment of this application;
FIG. 5 is a diagram of a structure of another virtual image display apparatus and a forming process of a virtual image according to an embodiment of this application;
FIG. 6 is diagram of a forming process of a ghost image of the virtual image display apparatus in FIG. 5;
FIG. 7 is a diagram of a structure and an imaging optical path of still another virtual image display apparatus according to an embodiment of this application;
FIG. 8 is a diagram of a structure of still another virtual image display apparatus according to an embodiment of this application; and
FIG. 9 is a diagram of a function of a transportation means according to an embodiment of this application.

**DESCRIPTION OF EMBODIMENTS**

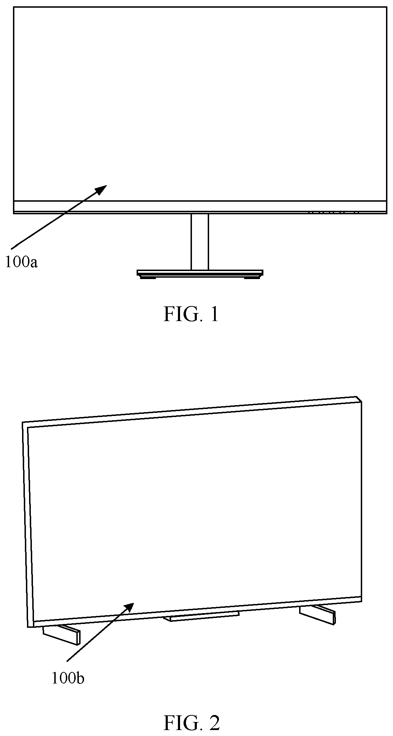

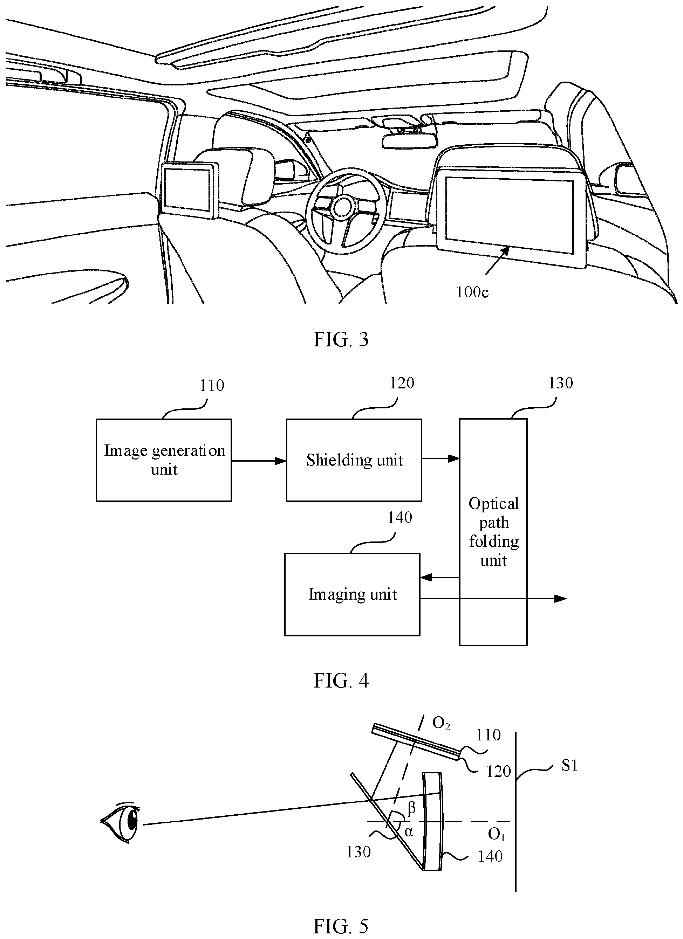

The following describes in detail a virtual image display apparatus provided in embodiments of this application with reference to the accompanying drawings. The virtual image display apparatus may be used as a common display (for example, 100a in FIG. 1) for office use, or may be used as a television (for example, 100b in FIG. 2) for home entertainment (as a television), or may be used for in-vehicle display (for example, 100c in FIG. 3, where the virtual image display apparatus is mounted on a seat of a vehicle, or mounted on an instrument console of a vehicle). A physical size, a display size, and a resolution of the virtual image display apparatus may be adjusted based on a use scenario. In this application, the virtual image display apparatus may also be referred to as a virtual image display system, a display system, or a display apparatus.

FIG. 4 is a diagram of a structure of a virtual image display apparatus according to an embodiment of this application. As shown in FIG. 4, the virtual image display apparatus includes: an image generation unit 110, a shielding unit 120, an optical path folding unit 130, and an imaging unit 140. The image generation unit 110 is configured to emit image light. The shielding unit 120 is located on an optical path between the image generation unit 110 and the optical path folding unit 130. The shielding unit 120 is configured to: transmit at least a part of the image light from the image generation unit 110 to the optical path folding unit 130, and prevent at least a part of stray light from the optical path folding unit 130 from being emitted to the optical path folding unit 130. The optical path folding unit 130 is configured to direct the image light from the shielding unit 120 to the imaging unit 140. The imaging unit 140 is configured to form a virtual image based on the image light from the optical path folding unit 130.

In this embodiment of this application, the image light is a light beam carrying image information. The image generation unit 110 may also be referred to as an image source. The imaging unit 140 performs imaging based on the received image light to generate an enlarged virtual image. The optical path folding unit 130 is configured to change a propagation direction of the image light emitted by the image generation unit 110, so that a propagation path of the image light is folded and arrives at the imaging unit 140. This can reduce a volume of the virtual image display apparatus.

In this embodiment of this application, the image light emitted by the image generation unit passes through the shielding unit and arrives at the optical path folding unit, and the optical path folding unit directs the received image light to the imaging unit. The imaging unit reflects the image light to human eyes, so that a user can view the virtual image.

Most of the image light emitted by the image generation unit participates in normal imaging, to form a target virtual image. However, a small part of the image light does not participate in normal imaging, and this part of light forms a ghost image. The ghost image is usually dark and does not overlap the target virtual image. In this embodiment of this application, this part of image light that does not participate in normal imaging is referred to as stray light. When the virtual image display apparatus does not include the shielding unit, stray light from the image generation unit is directed by the optical path folding unit to the imaging unit, and the stray light reflected by the imaging unit is directed by the optical path folding unit to an imaging surface of the image generation unit. Then, the imaging surface of the image generation unit reflects the stray light to the optical path folding unit, and the stray light is reflected to human eyes sequentially through the optical path folding unit and the imaging unit. If intensity of the stray light incident to the human eyes is high, the user may view an obvious ghost image.

In this embodiment of this application, the stray light from the image generation unit passes through the shielding unit and arrives at the optical path folding unit, and the optical path folding unit directs the received stray light to the imaging unit. The imaging unit then reflects the stray light to the optical path folding unit, and the stray light is directed to the shielding unit again through the optical path folding unit. A part of the stray light passes through the shielding unit and arrives at the image generation unit. Further, the image generation unit reflects the received stray light. The stray light passes through the shielding unit and arrives at the optical path folding unit, is directed by the optical path folding unit to the imaging unit, and finally is reflected to the human eyes by the imaging unit again.

Compared with a case in which the virtual image display apparatus does not include the shielding unit, in this case, because the shielding unit can prevent at least a part of the stray light from the optical path folding unit from being emitted to the optical path folding unit, in this embodiment of this application, intensity of the stray light reflected by the shielding unit to the optical path folding unit is low, so that intensity of the stray light incident to the human eyes is definitely reduced, and the user does not view an obvious ghost image or even views no ghost image. In this way, a display effect of the virtual image display apparatus is improved.

That the shielding unit 120 prevents at least a part of stray light from the optical path folding unit 130 from being emitted to the optical path folding unit 130 includes: The shielding unit 120 absorbs and/or changes a propagation direction of a part of the stray light from the optical path folding unit 130, so that the part of the stray light cannot arrive at the image generation unit 110, and/or the shielding unit absorbs and/or changes a propagation direction of a part of the stray light reflected by the image generation unit 110 to the optical path folding unit 130, so that the part of the stray light cannot arrive at the optical path folding unit 130.

In some examples, a reflection capability of a surface that is of the shielding unit 120 and that is close to the optical path folding unit 130 is lower than a reflection capability of an imaging surface of the image generation unit 110. Because the shielding unit 120 can absorb and/or change a propagation direction of a part of stray light, for a combination of the shielding unit 120 and the image generation unit 110, an overall reflection capability (that is, the reflection capability of the surface that is of the shielding unit 120 and that is close to the optical path folding unit 130) is reduced. In this way, there is less stray light reflected by the shielding unit 120 to the optical path folding unit, so that intensity of the stray light incident to the human eyes is low.

In this embodiment of this application, the reflection capability of the surface that is of the shielding unit 120 and that is close to the optical path folding unit 130 and the reflection capability of the imaging surface of the image generation unit 110 each may be an SCI reflectivity. That the reflection capability of the surface that is of the shielding unit 120 and that is close to the optical path folding unit 130 is lower than the reflection capability of the imaging surface of the image generation unit 110 means that an SCI reflectivity of the surface that is of the shielding unit 120 and that is close to the optical path folding unit 130 is lower than an SCI reflectivity of the imaging surface of the image generation unit 110.

Herein, the SCI reflectivity is a reflectivity measured in an SCI measurement method. The reflectivity measured in the SCI measurement method is obtained based on all light reflected (including specular reflection and diffuse reflection) by a target object.

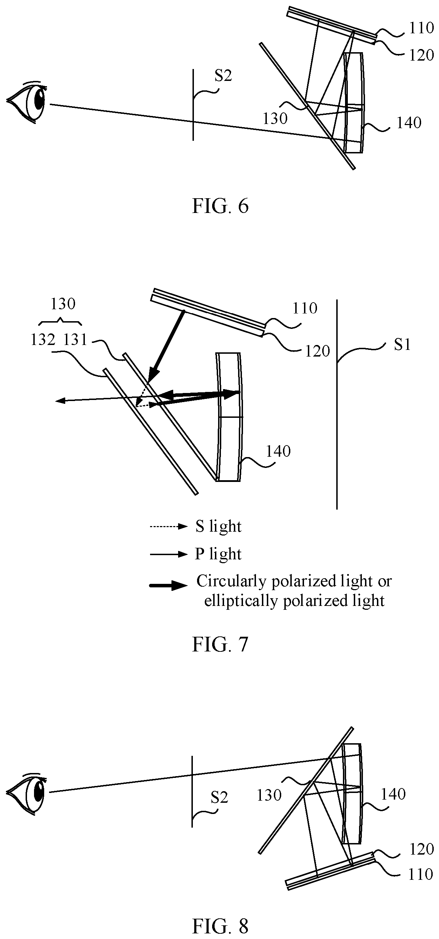

FIG. 5 and FIG. 6 are diagrams of a structure of another virtual image display apparatus according to an embodiment of this application. As shown in FIG. 5 and FIG. 6, the virtual image display apparatus includes: an image generation unit 110, a shielding unit 120, an optical path folding unit 130, and an imaging unit 140. The image generation unit 110 is configured to emit image light. The shielding unit 120 is located on an optical path between the image generation unit 110 and the optical path folding unit 130. The shielding unit 120 is configured to: transmit at least a part of the image light from the image generation unit 110 to the optical path folding unit 130, and prevent at least a part of stray light from the optical path folding unit 130 from being emitted to the optical path folding unit 130. The optical path folding unit 130 is configured to direct the image light from the shielding unit 120 to the imaging unit 140. The imaging unit 140 is configured to form a virtual image based on the image light from the optical path folding unit 130.

In some examples, the image generation unit 110 may be a direct imaging image source, for example, an LCD, an organic light-emitting diode, an OLED display, or an LED display. Herein, the LED display may be a micro (micro) LED display, a mini (mini) LED display, or the like.

In some other examples, the image generation unit 110 includes a projection imaging image source, and the projection imaging image source may be an optical engine (also referred to as a picture generation apparatus (picture generation unit, PGU)). The optical engine includes a light source and a reflective spatial light modulator. The light source is configured to generate a light beam, and the reflective spatial light modulator is configured to: modulate and reflect the light beam, to form image light. For example, the reflective spatial light modulator includes an LCoS modulator or an MEMS modulator. Optionally, in addition to the optical engine, the image generation unit 110 further includes a diffuser screen (not shown in the figure). The diffuser screen is configured to: receive the light beam output by the optical engine, and diffuse the received light beam (for example, perform diffuse reflection on the received light beam), to improve imaging quality.

A structure of the image generation unit 110 is not limited in this application, provided that the image generation unit 110 can provide the foregoing image light.

Optionally, when the light beam provided by the image generation unit 110 is two-dimensional image light, a virtual image viewed by a user is a two-dimensional image. Alternatively, when the light beam provided by the image generation unit 110 is three-dimensional image light, a virtual image viewed by a user is a three-dimensional image.

In some examples, the image light emitted by the image generation unit 110 may be linearly polarized light, circularly polarized light, or elliptically polarized light.

When a polarization state of the image light emitted by the image source in the image generation unit 110 is different from a target polarization state required by the image generation unit 110, the image generation unit 110 may further include a polarization state conversion element, configured to convert the image light generated by the image source into the target polarization state. The polarization state conversion element includes but is not limited to a quarter-wave plate, a P polarizer, an S polarizer, or a combination thereof (for example, a quarter-wave plate and a P polarizer, and a quarter-wave plate and an S polarizer). For example, a quarter-wave plate is disposed on a surface of an LCD, so that image light emitted by the LCD can be converted into circularly polarized light or elliptically polarized light.

In this embodiment of this application, the shielding unit 120 may be of any one of the following three film layer structures.

In a first structure, the shielding unit 120 includes an anti-reflection (anti-reflection, AR) layer (also referred to as an anti-reflection layer or an anti-reflection layer). The AR layer can reduce both specular reflection and diffuse reflection of an imaging surface of the image generation unit, to reduce luminance of a ghost image.

In a second structure, the shielding unit 120 includes an anti-glare (anti-glare, AG) layer.

In a third structure, the shielding unit 120 includes an AR layer and an AG layer that are stacked. The AR layer and the AG layer may be sequentially arranged in a light-emitting direction of the image generation unit 110, or the AG layer and the AR layer may be sequentially arranged in a light-emitting direction of the image generation unit 110. The AR layer and the AG layer that are stacked can reduce both specular reflection and diffuse reflection of the imaging surface of the image generation unit, to reduce luminance of a ghost image. For example, for the shielding unit 120 that uses the AR layer and the AG layer that are stacked, an SCI reflectivity of a surface that is of the shielding unit 120 and that is close to the optical path folding unit is not greater than 2%, so that the ghost image can be eliminated.

Herein, the AR layer is a film layer that can increase a transmittance of light in a target wavelength range and reduce a reflectivity of light in the target wavelength range. The target wavelength range covers light that is of all wavelengths and that is generated by the image generation unit and used to carry image information.

In some examples, the AR layer may include a plurality of stacked sublayers, and at least some of the plurality of sublayers have different refractive indexes. A reflectivity of light is reduced through an interference effect and cooperation of refractive indexes and thicknesses of the sublayers. For example, the AR layer includes a first sublayer and a second sublayer that are alternately stacked, and a refractive index of the first sublayer is different from that of the second sublayer. For example, the first sublayer may be a silicon dioxide ($SiO_2$) layer, and the second sublayer may be a niobium pentoxide ($Nb_2O_5$) layer. A quantity and thicknesses of the sublayers are not limited in embodiments of this application, and may be set based on an actual requirement.

In some other examples, the AR layer may be a moth-eye film.

The AG layer is a film layer that reduces specular reflection of a strong light source. In some examples, the AG layer has an anti-sparkling (anti-sparkling) function, and internal haze (internal haze) of the AG layer is greater than or equal to external haze (exterior haze) of the AG layer. The internal haze is a haze effect caused by a change of a moving direction of light due to occurrence of phenomena such as refraction, reflection, and scattering when the light passes through media (scattering particles and coatings) with different refractive indexes. The external haze is a haze effect caused by an uneven surface of a film layer. When the internal haze of the AG layer is greater than or equal to the external haze of the AG layer, display definition of the virtual image is improved. When the AG layer has the anti-sparkling function, no obvious bright spot appears on the virtual image display apparatus. This helps improve viewing experience of the user.

For example, the AG layer may be obtained through surface processing, and a surface processing manner includes but is not limited to particle doping, surface roughening, or the like.

The reflection capability of the imaging surface of the image shielding unit is reduced by using the shielding unit in the foregoing structure. This is easy to implement and has low costs.

In some other examples, the AG layer may alternatively not have an anti-sparkling function, or internal haze of the AG layer is less than external haze of the AG layer, provided that the virtual image can be displayed.

Optionally, the shielding unit 120 may be directly attached to the imaging surface of the image generation unit 110. For the direct imaging image source, the imaging surface is a surface that is of the direct imaging image source and that faces the optical path folding unit. For the projection imaging image source, the imaging surface is a surface that is of the diffuser screen and that faces the optical path folding unit. For example, the AR layer or the AG layer is directly deposited on a surface of the direct imaging image source, or the AR layer or the AG layer is pasted to a surface of the direct imaging image source through an optical adhesive. In this way, space occupied by the shielding unit is small, so that the virtual image display apparatus can be lighter and thinner.

Alternatively, in another embodiment, the shielding unit 120 may be disposed at an interval relative to the imaging surface of the image generation unit, so that a reflectivity for the stray light can also be reduced.

When the shielding unit is of the foregoing first structure and the third structure, if the AR layer or the AG layer is directly attached to the imaging surface of the image generation unit 110, a refractive index of the AR layer or the AG layer may cooperate with a refractive index of a film layer structure that is close to the imaging surface and that is in the image generation unit 110, to further reduce a reflectivity of the imaging surface of the image generation unit 110.

In this embodiment of this application, when the shielding unit 120 is directly attached to the imaging surface of the image generation unit 110, the SCI reflectivity of a surface that is of the shielding unit 120 and that is close to the optical path folding unit is not greater than 2%. In this way, the ghost image can be basically eliminated.

For example, for a shielding unit 120 including only an AR layer, when the shielding unit 120 is directly attached to the imaging surface of the image generation unit 110, a measured SCI reflectivity of a surface that is of the shielding unit 120 and that is close to the optical path folding unit is not greater than 1%. In this way, the ghost image can be eliminated.

For another example, for a shielding unit 120 including an AR layer and an AG layer that are stacked, when the shielding unit 120 is directly attached to the imaging surface of the image generation unit 110, a measured SCI reflectivity of a surface that is of the shielding unit 120 and that is close to the optical path folding unit is not greater than 2%. In this way, the ghost image can be eliminated.

In this embodiment of this application, the optical path folding unit 130 may include any one of the following structures.

In a first structure, as shown in FIG. 5 and FIG. 6, the optical path folding unit 130 includes a semi-transmission semi-reflection film, where the semi-transmission semi-reflection film is located on an optical path of the image light emitted by the image generation unit 110 and is located on an optical path of the image light emitted by the imaging unit 140.

The semi-transmission semi-reflection film may transmit a part of the image light and reflect the other part of the image light. A transmission proportion and a reflection proportion of the semi-transmission semi-reflection film are not limited in embodiments of this application. For example, a semi-transmission semi-reflection film with a transmittance of 90% and a reflectivity of 10% may be used; or a semi-transmission semi-reflection film with a transmittance of 80% and a reflectivity of 20% may be used; or a semi-transmission semi-reflection film with a transmittance of 70% and a reflectivity of 30% may be used; or a semi-transmission semi-reflection film with a transmittance of 60% and a reflectivity of 40% may be used; or a semi-transmission semi-reflection film with a transmittance of 50% and a reflectivity of 50% may be used.

A part of the image light emitted by the image generation unit 110 is reflected by the semi-transmission semi-reflection film to the imaging unit 140, the imaging unit 140 reflects the image light from the semi-transmission semi-reflection film to the semi-transmission semi-reflection film again, the semi-transmission semi-reflection film transmits the image light from the imaging unit 140, and the image light is incident to human eyes, to form a virtual image S1. Herein, the image light emitted by the image generation unit 110 may be linearly polarized light, circularly polarized light, or elliptically polarized light.

In a second structure, the optical path folding unit 130 includes a quarter-wave plate 131 and a reflective polarizing film 132, where the quarter-wave plate 131 and the reflective polarizing film 132 are sequentially located on an optical path of the image light emitted by the image generation unit 110, and are sequentially located on an optical path of the image light emitted by the imaging unit 140.

FIG. 7 is a diagram of a structure and an imaging optical path of a virtual image display apparatus with an optical path folding unit of the second structure. As shown in FIG. 7, circularly polarized light or elliptically polarized light emitted by the image generation unit 110 passes through the shielding unit 120 and arrives at the quarter-wave plate 131, and the quarter-wave plate 131 converts the circularly polarized light or the elliptically polarized light into linearly polarized light in a first polarization direction (S light). The reflective polarizing film 132 reflects the linearly polarized light in the first polarization direction (S light) from the quarter-wave plate to the quarter-wave plate 131 again, and the quarter-wave plate 131 converts the linearly polarized light in the first polarization direction (S light) from the reflective polarizing film 132 into circularly polarized light or elliptically polarized light again, and then emits the circularly polarized light or the elliptically polarized light to the imaging unit 140. The imaging unit 140 reflects the received circularly polarized light or elliptically polarized light, the circularly polarized light or the elliptically polarized light is converted into linearly polarized light in a second polarization direction (P light) after passing through the quarter-wave plate 131, and then the linearly polarized light in the second polarization direction is emitted to human eyes through the reflective polarizing film 132, to form a virtual image.

It should be noted that, in FIG. 7, to facilitate display of conversion of a polarization state of light, the quarter-wave plate 131 and the reflective polarizing film 132 are arranged at an interval, while in an actual application, the quarter-wave plate 131 and the reflective polarizing film 132 are closely attached.

In a third structure, the optical path folding unit 130 includes a quarter-wave plate, a reflective polarizing film, and an absorptive polarizing film, where the quarter-wave plate, the reflective polarizing film, and the absorptive polarizing film are sequentially located on an optical path of the image light emitted by the image generation unit 110, and are sequentially located on an optical path of the image light emitted by the imaging unit 140.

Circularly polarized light or elliptically polarized light emitted by the image generation unit is converted into linearly polarized light in a first polarization direction after passing through the quarter-wave plate, and the reflective polarizing film reflects most of the linearly polarized light in the first polarization direction from the quarter-wave plate to the quarter-wave plate again. The quarter-wave plate converts the linearly polarized light in the first polarization direction from the reflective polarizing film into circularly polarized light or elliptically polarized light again, and then emits the circularly polarized light or the elliptically polarized light to the imaging unit. The absorptive polarizing film is configured to absorb the linearly polarized light in the first polarization direction that passes through the reflective polarizing film. The imaging unit reflects the received circularly polarized light or elliptically polarized light, the circularly polarized light or the elliptically polarized light is converted into linearly polarized light in a second polarization direction after passing through the quarter-wave plate, and then the linearly polarized light in the second polarization direction is emitted to human eyes sequentially through the reflective polarizing film and the absorptive polarizing film, to form a virtual image.

The absorptive polarizing film is disposed, so that the image light emitted by the image generation unit cannot directly incident to human eyes to form a real image, thereby further avoiding interference to the virtual image and improving a viewing effect of the user.

In a fourth structure, the optical path folding unit 130 includes an AR film, a quarter-wave plate, and a reflective polarizing film, where the anti-reflection film, the quarter-wave plate, and the reflective polarizing film are sequentially located on an optical path of the image light emitted by the image generation unit, and are sequentially located on an optical path of the image light emitted by the imaging unit.

Compared with the second structure, in the fourth structure, the AR film is added. This helps reduce stray light caused by interface reflection, further improves a display effect, and improves a lighting effect.

In a fifth structure, the optical path folding unit 130 includes an AR film, a quarter-wave plate, a reflective polarizing film, and an absorptive polarizing film, where the anti-reflection film, the quarter-wave plate, the reflective polarizing film, and the absorptive polarizing film are sequentially located on an optical path of the image light emitted by the image generation unit 110, and are sequentially located on an optical path of the image light emitted by the imaging unit 140.

Compared with the third structure, in the fourth structure, the AR film is added. This helps reduce stray light caused by interface reflection, further improves a display effect, and improves a lighting effect.

It should be noted that, in this embodiment of this application, the polarizing film may also be referred to as a polarizer or a polarizing sheet. A polarization direction of the reflective polarizing film is the same as that of the absorptive polarizing film, and both are a second polarization direction. In this way, the reflective polarizing film is configured to: reflect linearly polarized light in a first polarization direction and transmit linearly polarized light in the second polarization direction, and the absorptive polarizing film is configured to: absorb the linearly polarized light in the first polarization direction and transmit the linearly polarized light in the second polarization direction. The first polarization direction is perpendicular to the second polarization direction. For example, the linearly polarized light in the first polarization direction is S light, and the linearly polarized light in the second polarization direction is P light. Alternatively, the linearly polarized light in the first polarization direction is P light, and the linearly polarized light in the second polarization direction is S light.

In addition, an imaging optical path of each of the third to the fifth structures is basically the same as the imaging optical path of the second structure (as shown in FIG. 7). Therefore, detailed descriptions are omitted.

Optionally, the virtual image display apparatus further includes a housing (not shown in the figure). The housing has an observation window, and the observation window is opposite to eyes of the user, so that the user can view the virtual image. The image generation unit 110, the shielding unit 120, the optical path folding unit 130, and the imaging unit 140 are all located in the housing. In this way, the housing 140 may protect the units, and the units are integrated together by using the housing 140, to facilitate overall movement of the virtual image display apparatus.

A shape of the housing is not limited in embodiments of this disclosure, and may be a cuboid, a cylinder, or the like. In addition, when the virtual image display apparatus is integrated in a large product, for example, integrated in a seat of a transportation means, an accommodating cavity may be provided by using the seat, and the image generation unit 110, the shielding unit 120, the optical path folding unit 130, and the imaging unit 140 are directly disposed in the accommodating cavity, so that the housing may be omitted.

In some examples, the imaging unit 120 includes an opaque reflective imaging element, for example, a curved-surface reflector (for example, a curved-surface reflector made of metal). In some other examples, the imaging unit 120 includes a transparent reflective imaging element, for example, a lens, a lens group including a plurality of lenses, or a transparent curved-surface mirror. When the imaging unit 120 includes the opaque reflective imaging element, the virtual image display apparatus is a virtual reality (virtual reality, VR) display apparatus. When the imaging unit 120 includes the transparent reflective imaging element, the virtual image display apparatus is an augmented reality (augmented reality, AR) display apparatus.

The foregoing describes the structures of the units, and the following describes an arrangement of the units with reference to FIG. 5.

As shown in FIG. 5, the optical path folding unit 130 has a reflective surface. The reflective surface is configured to reflect at least a part of the image light from the shielding unit 120 to the imaging unit 140. A value of an included angle $\alpha$ between the reflective surface and an optical axis $O_1$ of the imaging unit 140 ranges from 55 degrees to 75 degrees. A value of an included angle $\beta$ between an optical axis $O_2$ of the image generation unit 110 and the optical axis $O_1$ of the imaging unit 140 ranges from 55 degrees to 75 degrees.

It is found through a simulation experiment that when the reflective surface of the optical path folding unit 130, the optical axis $O_1$ of the imaging unit 140, and the optical axis $O_2$ of the image generation unit 110 meet the foregoing angle relationship, display performance of the virtual image display apparatus is good. Herein, the display performance includes distortion, binocular parallax, a modulation transfer function (modulation transfer function, MTF), and the like. However, when the reflective surface of the optical path folding unit 130, the optical axis $O_1$ of the imaging unit 140, and the optical axis $O_2$ of the image generation unit 110 satisfy the foregoing angle relationship, a ghost image is obvious. Therefore, the shielding unit particularly needs to be disposed in the virtual image display apparatus.

For example, an included angle between the optical axis $O_1$ of the imaging unit 140 and a horizontal plane ranges from 0 degrees to 5 degrees. In FIG. 5, an example in which the optical axis $O_1$ is parallel to the horizontal plane is used for illustration. Usually, a line of sight of the user is approximately parallel to the horizontal plane when the user views the virtual image. Therefore, the included angle between the optical axis of the imaging unit and the horizontal plane is set to 0 degrees to 5 degrees, which is convenient for the user to view.

When the included angle between the optical axis $O_1$ of the imaging unit 140 and the horizontal plane is 0 to 5 degrees, an included angle between the optical axis $O_1$ of the imaging unit 140 and the horizontal plane is 60 degrees to 70 degrees (for example, 65 degrees), and an included angle between the reflective surface of the optical path folding unit 130 and a vertical plane is 20 degrees to 30 degrees (for example, 25 degrees).

It should be noted that, in FIG. 5, FIG. 6, and FIG. 7, an example in which the image generation unit 110 is located above the imaging unit 140, and both the image generation unit 110 and the imaging unit 140 are located on a right side (a side away from the user) of the optical path folding unit 130 is used for illustration. During actual application, the image generation unit 110 may alternatively be disposed below the imaging unit 140, as shown in FIG. 8.

Optionally, the virtual image display apparatus may further include a main processor. The main processor is configured to send image data to the image generation unit.

Optionally, the virtual image display apparatus further includes a power supply that supplies power to the main processor and the image generation unit.

In this embodiment of this application, as shown in FIG. 5, the image light emitted by the image generation unit 110 passes through the shielding unit 120 and arrives at the optical path folding unit 130, and the optical path folding unit 130 directs the received image light to the imaging unit 140. The imaging unit 140 reflects the image light to human eyes, so that the user can view the virtual image S1.

When the virtual image display apparatus does not include the shielding unit, stray light that is emitted by the image generation unit and that does not participate in forming of the virtual image is directed by the optical path folding unit to the imaging unit, and the stray light reflected by the imaging unit is directed by the optical path folding unit to the imaging surface of the image generation unit. Then, the imaging surface of the image generation unit reflects the stray light to the optical path folding unit, and the stray light is reflected to human eyes sequentially through the optical path folding unit and the imaging unit.

In this embodiment of this application, as shown in FIG. 6, the stray light from the image generation unit 110 passes through the shielding unit 120 and arrives at the optical path folding unit 130, and the optical path folding unit 130 directs the received stray light to the imaging unit 140. The imaging unit 140 then reflects the stray light to the optical path folding unit 130, and the stray light is directed again to the shielding unit 120 and the image generation unit 110 by the optical path folding unit 130. The stray light reflected by the shielding unit 120 and the image generation unit 110 arrives at the optical path folding unit 130 again, is then directed by the optical path folding unit 130 to the imaging unit 140, and is reflected by the imaging unit 140 to human eyes. If the stray light incident to the human eyes is strong, the human eyes view a ghost image S2.

It is assumed that a transmittance of the optical path folding unit is T1 and a reflectivity of the optical path folding unit is R1, a reflectivity of the imaging unit is R2, a reflectivity of the imaging surface of the image generation unit is R3, and luminance of emergent light is Lv. Therefore, luminance L1 of the virtual image formed by the virtual image display apparatus and luminance L2 of the ghost image formed by the virtual image display apparatus may be calculated by using formular (1) and formular (2) respectively.

$$L1 = Lv \times R1 \times R2 \times T1 \ (1)$$

$$L2=Lv\times R1\times R2\times R1\times R3\times R1\times R2\times T1 \text{ (2)}$$

It can be learned from formula (1) and formula (2) that the luminance of the virtual image is strongly correlated with R1, R2, and T1. On the premise that a system lighting effect is not affected, reducing R3 can effectively reduce the luminance of the ghost image.

Therefore, in this embodiment of this application, because the shielding unit prevents the stray light from the optical path folding unit from being emitted to the optical path shielding unit again, the reflection capability of the surface that is of the shielding unit and that is close to the optical path folding unit is lower than the reflection capability of the imaging surface of the image generation unit, which is equivalent to a decrease of R3. Therefore, intensity of the stray light incident to human eyes is definitely reduced, the user does not view an obvious ghost image or even views no ghost image. In this way, a display effect of the virtual image display apparatus is improved.

For example, the image source is the LCD, and an SCI reflectivity of an imaging surface of the LCD is usually about 6%. By reducing the SCI reflectivity to 1%, luminance of a ghost image can be reduced to 16.7% of original luminance of the ghost image (that is, the luminance of the ghost image that is obtained when no shielding unit is disposed).

An embodiment of this application further provides a transportation means, where the transportation means includes any one of the foregoing virtual image display apparatuses.

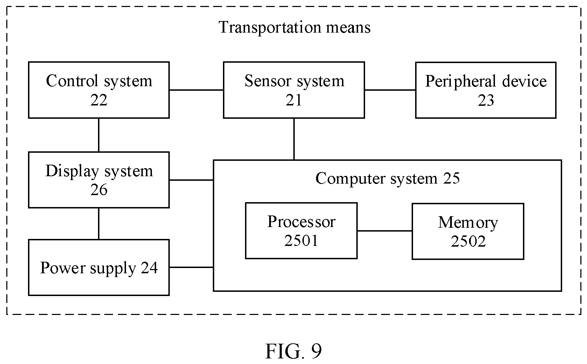

FIG. 9 is a diagram of a function of a transportation means according to an embodiment of this application.

The transportation means may include various subsystems, for example, a sensor system 21, a control system 22, one or more peripheral devices 23 (one is used as an example in the figure), a power supply 24, a computer system 25, and a display system 26 that are shown in the figure, and the foregoing subsystems may communicate with each other. The display system 22 may include the virtual image display apparatus provided in embodiments of this application. The transportation means may further include another function system, for example, an engine system that supplies power to the transportation means, and a cockpit. This is not limited herein in this application.

The sensor system 21 may include several detection apparatuses. The detection apparatuses can sense measured information, and convert, according to a specific rule, the sensed information into an electrical signal or information of another required form for output. As shown in FIG. 9, the detection apparatuses may include a global positioning system (Global Positioning System, GPS), a vehicle speed sensor, an inertial measurement unit (Inertial Measurement Unit, IMU), a radar unit, a laser rangefinder, a camera apparatus, a wheel speed sensor, a steering sensor, a gear sensor, another element used for automatic detection, or the like. This is not limited in this application.

The control system 22 may include several elements, for example, a steering unit, a brake unit, a lighting system, an autonomous driving system, a map navigation system, a network timing system, and an obstacle avoidance system that are shown in the figure. The control system 22 may receive information (such as a vehicle speed and a vehicle distance) sent by the sensor system 21, to implement functions such as autonomous driving and map navigation.

Optionally, the control system 14 may further include elements such as a throttle controller and an engine controller that are configured to control a driving speed of a vehicle. This is not limited in this application.

The peripheral device 23 may include several elements, for example, a communication system, a touchscreen, a user interface, a microphone, and a speaker. The communication system is configured to implement network communication between the transportation means and a device other than the transportation means. During actual application, the communication system may implement network communication between the transportation means and another device by using a wireless communication technology or a wired communication technology. The wired communication technology may mean that the vehicle communicates with another device through a network cable, an optical fiber, or the like.

The power supply 24 represents a system that provides electrical power or energy for the vehicle, and the power supply 24 may include but is not limited to a rechargeable lithium battery or a lead-acid battery. During actual application, one or more battery components in the power supply are configured to provide electrical energy or energy for starting the vehicle. A type and a material of the power supply are not limited in this application.

Implementation of several functions of the transportation means may be controlled by the computer system 25. The computer system 25 may include one or more processors 2501 (one processor is shown as an example in the figure) and a memory 2502 (also referred to as a storage apparatus). During actual application, the memory 2502 is also inside the computer system 25, or may be outside the computer system 25, for example, used as a cache in the transportation means. This is not limited in this application.

The processor 2501 may include one or more general-purpose processors, for example, a graphic processing unit (graphic processing unit, GPU). The processor 2501 may be configured to run a related program stored in the memory 2502 or instructions corresponding to a program, to implement a corresponding function of the vehicle.

The memory 2502 may include a volatile memory (volatile memory), for example, a RAM. The memory may alternatively include a non-volatile memory (non-volatile memory), for example, a ROM, a flash memory (flash memory), an HDD, or a solid-state drive (SSD). Alternatively, the memory 2502 may include a combination of the foregoing types of memories. The memory 2502 may be configured to store a set of program code or instructions corresponding to program code, so that the processor 2501 invokes the program code or the instructions stored in the memory 2502 to implement a corresponding function of the vehicle. In this application, the memory 2502 may store a set of program code used for vehicle control. The processor 2501 may control safe driving of the vehicle by invoking the program code. A manner of implementing safe driving of the vehicle is specifically described in detail below in this application.

Optionally, in addition to storing the program code or the instructions, the memory 2502 may further store information such as a road map, a driving route, and sensor data. The computer system 25 may implement a related function of the vehicle in combination with other elements in the diagram of the function framework of the vehicle, for example, the sensor and the GPS in the sensor system. For example, the computer system 25 may control a driving direction, a driving speed, or the like of the transportation means based on data input of the sensor system 21. This is not limited in this application.

The display system 26 may interact with another system in the transportation means, for example, the display system 26 may display navigation information sent by the control system 22, or play videos sent by the computer system 25 and the peripheral device 23. For a specific structure of the display system 26, refer to the foregoing embodiments of the virtual image display apparatus. Details are not described herein again.

In this embodiment, the four subsystems shown in the figure, namely, the sensor system 21, the control system 22, the computer system 25, and the display system 26, are merely examples, and do not constitute a limitation. During actual application, the transportation means may combine several elements in the vehicle based on different functions, to obtain subsystems with corresponding different functions. During actual application, the transportation means may include more or fewer subsystems or elements. This is not limited in this application.

The transportation means in this embodiment of this application may be a known transportation means like a vehicle, an airplane, a ship, or a rocket, or may be new transportation means that is to emerge in the future. The vehicle may be an electric vehicle, a fuel vehicle, or a hybrid power vehicle, for example, a pure electric vehicle, a range extended electric vehicle, a hybrid electric vehicle, a fuel cell vehicle, or a new energy vehicle. This is not specifically limited in this application.

Unless otherwise defined, a technical term or a scientific term used herein should have a general meaning understood by a person of ordinary skill in the art of this disclosure. The terms "first", "second", "third", and the like used in the specification and claims of this patent application are not intended to indicate any order, quantity, or significance, but are intended to distinguish between different components. Likewise, "a/an", "one", or the like is not intended to indicate a quantity limitation either, but is intended to indicate existing at least one. Terms such as "include" mean that an element or object before "include" encompasses elements or objects and their equivalents listed after "include", and other elements or objects are not excluded. "A and/or B" indicates that the following three cases exist: A, B, and A and B.

The foregoing descriptions are merely an embodiment of this application, but are not intended to limit this application. Any modification, equivalent replacement, or improvement made without departing from the principle of this application shall fall within the protection scope of this application.

**Claims**

1. A virtual image display apparatus, comprising an image generation unit, a shielding unit, an optical path folding unit, and an imaging unit, wherein

   the image generation unit is configured to emit image light;
   the shielding unit is located on an optical path between the image generation unit and the optical path folding unit, and the shielding unit is configured to: transmit at least a part of the image light from the image generation unit to the optical path folding unit, and prevent at least a part of stray light from the optical path folding unit from being emitted to the optical path folding unit;
   the optical path folding unit is configured to direct the image light from the shielding unit to the imaging unit; and
   the imaging unit is configured to form a virtual image based on the image light from the optical path folding unit.

2. The virtual image display apparatus according to claim 1, wherein the shielding unit comprises any one of the following film layers: an anti-reflection layer, an anti-glare layer, and an anti-reflection layer and an anti-glare layer that are stacked.

3. The virtual image display apparatus according to claim 2, wherein internal haze of the anti-glare layer is greater than external haze of the anti-glare layer, and/or the anti-glare layer has an anti-sparkling function.

4. The virtual image display apparatus according to any one of claims 1 to 3, wherein the shielding unit is attached to an imaging surface of the image generation unit.

5. The virtual image display apparatus according to any one of claims 1 to 4, wherein a specular component include SCI reflectivity of a surface that is of the shielding unit and that is close to the optical path folding unit is not greater than 2%.

6. The virtual image display apparatus according to any one of claims 1 to 5, wherein the optical path folding unit has a reflective surface, the reflective surface is configured to reflect at least a part of the image light from the shielding unit to the imaging unit, and a value of an included angle between the reflective surface and an optical axis of the imaging unit ranges from 55 degrees to 75 degrees; and
a value of an included angle between an optical axis of the image generation unit and the optical axis of the imaging unit ranges from 55 degrees to 75 degrees.

7. The virtual image display apparatus according to any one of claims 1 to 6, wherein the optical path folding unit comprises a semi-transmission semi-reflection film that is located on an optical path of the image light emitted by the image generation unit and is located on an optical path of the image light emitted by the imaging unit; or

the optical path folding unit comprises a quarter-wave plate and a reflective polarizing film that are sequentially located on an optical path of the image light emitted by the image generation unit and are sequentially located on an optical path of the image light emitted by the imaging unit; or
the optical path folding unit comprises a quarter-wave plate, a reflective polarizing film, and an absorptive polarizing film that are sequentially located on an optical path of the image light emitted by the image generation unit and are sequentially located on an optical path of the image light emitted by the imaging unit; or
the optical path folding unit comprises an anti-reflection film, a quarter-wave plate, and a reflective polarizing film that are sequentially located on an optical path of the image light emitted by the image generation unit and are sequentially located on an optical path of the image light emitted by the imaging unit; or
the optical path folding unit comprises an anti-reflection film, a quarter-wave plate, a reflective polarizing film, and an absorptive polarizing film that are sequentially located on an optical path of the image light emitted by the image generation unit and are sequentially located on an optical path of the image light emitted by the imaging unit.

8. The virtual image display apparatus according to any one of claims 1 to 7, wherein an included angle between the optical axis of the imaging unit and a horizontal plane ranges from 0 degrees to 5 degrees.

9. The virtual image display apparatus according to any one of claims 1 to 8, wherein the imaging unit comprises a curved-surface reflector or a lens.

10. The virtual image display apparatus according to any one of claims 1 to 9, wherein the image light emitted by the image generation unit is linearly polarized light, circularly polarized light, or elliptically polarized light.

11. The virtual image display apparatus according to any one of claims 1 to 10, wherein the image generation unit comprises a liquid crystal display, an organic light-emitting diode OLED display, or a light-emitting diode LED display; or
the image generation unit comprises a light source and a reflective spatial light modulator, and the reflective spatial light modulator is configured to: modulate and reflect a light beam generated by the light source, to obtain the image light.

12. The virtual image display apparatus according to any one of claims 1 to 11, wherein the virtual image display apparatus is a desktop display apparatus.

13. A transportation means, comprising the virtual image display apparatus according to any one of claims 1 to 12, wherein the virtual image display apparatus is mounted on the transportation means.

100a

FIG. 1

100b

FIG. 2

FIG. 3

FIG. 4

FIG. 5

FIG. 6

------▶ S light

———▶ P light

━━━▶ Circularly polarized light or
elliptically polarized light

FIG. 7

FIG. 8

Transportation means

| Control system 22 | Sensor system 21 | Peripheral device 23 |

Display system 26

Power supply 24

Computer system 25

Processor 2501 — Memory 2502

FIG. 9

## INTERNATIONAL SEARCH REPORT

| International application No. |
| --- |
| **PCT/CN2023/102365** |

### A. CLASSIFICATION OF SUBJECT MATTER

G02B27/00(2006.01)i; G02B27/01(2006.01)i

According to International Patent Classification (IPC) or to both national classification and IPC

### B. FIELDS SEARCHED

Minimum documentation searched (classification system followed by classification symbols)

IPC: G02B27

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 虚像, 显示, 头戴, 抬头, 遮挡, 眩光, 眩目, 增透, 减透, 抗反, 防反, 杂光, 散光, 折叠, VR, AR, MR, virtual+, reality, HUD, head-up, glare, anti-reflection, stray, light, overlap+

### C. DOCUMENTS CONSIDERED TO BE RELEVANT

| Category* | Citation of document, with indication, where appropriate, of the relevant passages | Relevant to claim No. |
| --- | --- | --- |
| X | CN 211263953 U (NINGBO HONGYI OPTOELECTRONICS TECHNOLOGY CO., LTD.) 14 August 2020 (2020-08-14) description, paragraphs 0040-0104, and figures 1-6 | 1-13 |
| X | CN 111399224 A (GUANGDONG OPPO MOBILE COMMUNICATIONS CO., LTD.) 10 July 2020 (2020-07-10) description, paragraphs 0023-0061, and figures 1-5 | 1-13 |
| X | DE 102017212445 A1 (ROBERT BOSCH GMBH) 24 January 2019 (2019-01-24) description, paragraphs 0027-0042, and figures 1-6 | 1-13 |
| X | CN 215986727 U (JITONG TECHNOLOGY (BEIJING) CO., LTD.) 08 March 2022 (2022-03-08) description, paragraphs 0032-0051, and figures 1-6 | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 October 2023** | **07 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/102365**

| Patent document cited in search report | | | Publication date (day/month/year) | Patent family member(s) | Publication date (day/month/year) |
|---|---|---|---|---|---|
| CN | 211263953 | U | 14 August 2020 | None | |
| CN | 111399224 | A | 10 July 2020 | None | |
| DE | 102017212445 | A1 | 24 January 2019 | None | |
| CN | 215986727 | U | 08 March 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211349472